# DEMANDE DE BREVET EUROPEEN

(11) **EP 0 582 937 A1**
(43) Date de publication de la demande: **16.02.1994**
(21) Numéro de dépôt: 93112402.8
(22) Date de dépôt: 03.08.1993
(51) Int. Cl.: H04N 1/00, B65H 5/06, B65H 7/00

(54) **Dispositif de transport de papier destiné à être utilisé dans un télécopieur**

(30) Priorité: 11.08.1992 FR 9209983
(71) Demandeur: SWATCH AG, CH-2500 Biel (CH)
(72) Inventeur: Junod, Blaise-Alain, CH-2056 Dombresson (CH)
(74) Mandataire: de Montmollin, Henri

(57) **Abrégé**

Ce dispositif (2) comprend un galet de lecture (10), un galet d'impression (11), un moteur (16) ayant un arbre (20), des premiers moyens de transmission (17) pour transmettre au galet de lecture (10) la rotation du arbre (20) dans un premier sens (C) et transporter le premier support (52) devant des moyens de lecture (4) et des seconds moyens de transmission (18) pour transmettre au galet d'impression (11) la rotation du arbre (20) dans un second sens (D) et transporter le second support (51) devant des moyens d'impression (11). Le dispositif de transport de papier (2) comprend en outre des troisièmes moyens de transmission (19) pour transmettre au galet d'impression (11) la rotation du arbre (20) dans le second sens (D) pour que le galet d'impression (11) se déplace d'un angle donné transportant ainsi, d'une longueur correspondante, le second support (51) et lesdits moyens d'impression (5) dans une direction arrière opposée à ladite direction avant.

## Description

La présente invention concerne un dispositif de transport de papier en bande ou analogue et en particulier un dispositif de transport de papier destiné à être utilisé dans un télécopieur. L'invention est destinée à être utilisée dans les télécopieurs oui sont aptes à lire une feuille de papier portant des données graphiques et à imprimer des données graphiques reçues sur un rouleau de papier.

On comprendra toutefois que cette invention n'est pas limitée aux télécopieurs et peut être utilisée également dans d'autres appareils nécessitant le transport de papier en bande ou analogue le long de chemins dans des appareils tels que des imprimantes, des machines de traitement et de développement de films ou analogues.

Les télécopieurs destinés à recevoir et à transmettre des messages imprimés par l'intermédiaire d'une ligne téléphonique sont actuellement très largement répandus aussi bien dans les bureaux que chez les particuliers. De tels appareils comprennent un analyseur d'images ou lecteur pour lire des données graphiques telles que des textes imprimés sur des feuilles de papier et pour transformer ces textes en signaux électriques qui sont transmis ultérieurement. Un tel appareil comprend également une tête d'impression pour imprimer des messages correspondant aux signaux reçus. Il est nécessaire d'utiliser dans ces appareils un dispositif de transport de papier pour que le papier portant les données graphiques à transmettre soit transporté et lu par l'analyseur d'images, et pour que le papier provenant d'un rouleau de stockage interne d'une autre source de papier puisse être transporté devant la tête d'impression pour que les messages reçus puissent être imprimés sur ce dernier rouleau de papier.

On connaît déjà des dispositifs de transport de papier qui utilisent des séries de galets pour transporter le papier à l'intérieur du télécopieur. De tels galets sont entraînés soit directement ou indirectement par un ou plusieurs moteurs montés dans le télécopieur. Quand un galet est directement entraîné par un moteur, l'arbre de moteur est directement couplé au galet de sorte que la rotation de l'arbre entraîne directement la rotation du galet. Dans le cas d'un galet entraîné indirectement, l'arbre du ou des moteurs est relié au galet par l'intermédiaire d'un train d'engrenages. En choisissant les dimensions relatives des roues dentées du train d'engrenages, il est possible de choisir la vitesse de rotation d'un galet par rapport à celle de l'arbre moteur. Ainsi, la vitesse à laquelle le papier portant les données graphiques à transmettre est régulée lorsqu'il passe devant le lecteur et la vitesse de défilement du papier provenant du rouleau de stockage est également régulée lorsqu'il passe devant la tête d'impression.

Certains télécopieurs utilisent un moteur séparé pour commander chaque galet de sorte que les fonctions de transport de papier associées aux fonctions de lecture et d'impression sont commandées de façon indépendante.

On connaît également d'autres télécopieurs qui n'utilisent qu'un seul moteur en liaison avec les fonctions de lecture et d'impression. Dans ce cas, les galets utilisés pour faire défiler le papier le long des chemins nécessaires pour que le télécopieur puisse réaliser les fonctions de lecture et d'impression sont tous deux couplés à l'arbre d'un seul moteur par l'intermédiaire de trains d'engrenages différents. La rotation de l'arbre du moteur dans un sens est ainsi utilisée pour entraîner certains galets et ainsi envoyer les pages contenant les données graphiques à transmettre en regard du lecteur de sorte que la fonction de lecture puisse être réalisée. La rotation dans l'autre sens est utilisée pour entraîner d'autres galets et ainsi envoyer du papier à partir du rouleau de stockage en regard d'une tête d'impression de sorte que la fonction d'impression puisse être réalisée.

Les galets moteurs et les trains d'engrenages dans de tels télécopieurs sont logés dans un boîtier de protection. Le rouleau de papier sur lequel les données graphiques sont reçues et imprimées est également logé dans ce boîtier. Le papier provenant de ce rouleau doit être fourni au dispositif de transport de papier en regard de la tête d'impression et ensuite à travers une ouverture ménagée dans le boîtier pour être délivré à l'utilisateur. Une fois que le papier sur lequel les données graphiques sont imprimées a été fourni, le papier est déchiré par l'utilisateur afin le détacher du reste du rouleau. On laisse ainsi une longueur de papier sur laquelle aucune donnée graphique n'a été imprimée entre la tête d'impression et ladite ouverture.

Afin d'éviter de gaspiller cette longueur de papier, il existe des télécopieurs qui sont équipés d'un dispositif de transport de papier qui entraîne les galets, associés à la fonction d'impression, en rotation inverse d'un angle de rotation donné tel qu'une longueur donnée de papier peut être déplacée en amont de la tête d'impression avant l'impression de données graphiques. Quand la fonction d'impression démarre, cette longueur de papier passe à nouveau devant la tête d'impression et peut ainsi être imprimée plutôt qu'être simplement gaspillée.

Comme cela a été décrit plus haut, les télécopieurs existants utilisent un moteur qui dans un sens de rotation transporte le papier le long d'un chemin pour une fonction de lecture et dans un autre sens de rotation transporte le papier le long d'un autre chemin pour une fonction d'impression. Les deux fonctions nécessitent ainsi que les galets associées à chacune des fonctions et à l'arbre soient aptes à tourner indéfiniment de sorte que des lettres de différentes longueurs puissent passer devant le lecteur et que suffisamment de papier puisse être fourni pour imprimer des données graphiques reçues de longueurs variables. Toutefois, la fonction de retour de papier décrite ci-dessus nécessite que les galets associés à la fonction d'impression soient entraînés en sens inverse d'une distance angulaire donnée seulement lorsque l'on actionne cette fonction de retour de papier.

Le sens de rotation des galets associés à la fonction d'impression ne peut pas être simplement inversé quand le télécopieur réalise une fonction de lecture car ces galets continueraient alors à tourner pendant la durée de la fonction de lecture et non pas simplement d'une distance angulaire donnée.

C'est pourquoi de nombreux télécopieurs utilisent un moteur supplémentaire pour commander en sens inverse la rotation des galets associés à la fonction d'impression indépendamment du moteur commandant la fonction de lecture et d'impression.

On connaît également d'autres télécopieurs qui utilisent un moteur pour commander la rotation des galets associés à la fonction de lecture et un autre moteur pour commander la rotation des galets associés aux fonctions d'impression et de rembobinage du papier dans les deux sens.

L'utilisation d'un moteur supplémentaire augmente toutefois le poids et le coût de tels télécopieurs. Le dispositif de transport de papier est rendu plus complexe et par conséquent plus difficile à fabriquer et à réparer. On doit prévoir également un espace supplémentaire dans le boîtier ce qui rend le télécopieur plus volumineux et lui donne une apparence moins séduisante.

L'invention a donc pour but de fournir un dispositif de transport de papier destiné à être utilisée dans un télécopieur qui pallie les inconvénients de l'art antérieur susmentionné.

A cet effet, l'invention a pour objet un dispositif de transport de papier destiné à être utilisé dans un télécopieur comprenant des moyens de lecture pour lire des données graphiques à transmettre à partir d'un premier support et des moyens d'impression pour imprimer des données graphiques reçues sur un second support, ledit dispositif de transport de papier comprenant un galet de lecture pour transporter ledit premier support devant lesdits moyens de lecture, un galet d'impression pour transporter ledit second support devant lesdits moyens d'impression dans une direction avant, un moteur ayant un arbre pouvant être entraînée en rotation dans les deux sens, des premiers moyens de transmission pour transmettre audit galet de lecture la rotation dudit arbre dans un premier sens et transporter ledit premier support devant lesdits moyens de lecture et des seconds moyens de transmission pour transmettre la rotation audit galet d'impression dudit arbre dans un second sens et transporter ledit second support devant lesdits moyens d'impression, caractérisé en ce que ledit dispositif de transport de papier comprend en outre des troisième moyens de transmission pour transmettre audit galet d'impression la rotation dudit arbre dans ledit second sens pour que le galet d'impression se déplace d'un angle donné, transportant ainsi, d'une longueur correspondante, dudit second support devant ladite unité d'impression dans une direction arrière opposée à ladite direction avant.

Ainsi, le dispositif de transport de papier comprend un unique moteur pour réaliser chacune des fonctions de lecture, d'impression et de retour de papier dans le télécopieur. L'un des trois moyens de transmission de rotation qui relie l'arbre du moteur aux galets de lecture et d'impression est apte à entraîner le galet d'impression en rotation seulement un angle déterminé pour réaliser le retour du papier de sorte qu'un moteur séparé n'est pas nécessaire pour commander la fonction de retour de papier.

Dans un mode de réalisation préféré de l'invention, un des moyens de transmission qui relie l'arbre du moteur aux galets d'impression comprend une pluralité d'éléments rotatifs, telle qu'une série de roues d'engrenage, comprenant un élément rotatif qui vient en contact avec un élément rotatif adjacent seulement sur une partie de la périphérie de celui-ci. Le rouleau d'impression est ainsi entraîné en rotation dans le sens inverse afin de transporter le papier en arrière devant la tête d'impression, seulement pendant la durée de ce contact. La distance sur laquelle le papier est transporté en arrière devant la tête d'impression peut ainsi être contrôlé en fixant la longueur de la partie de la périphérie sur laquelle le contact se produit.

Puisqu'un seul moteur est nécessaire pour réaliser les fonctions de lecture, d'impression et de retour de papier, le moteur peut être disposé de façon avantageuse afin de minimiser l'espace nécessaire dans le télécopieur.

Dans un autre mode de réalisation de l'invention, le moteur est disposé coaxialement au rouleau de lecture de sorte que quand une fonction de lecture est réalisée, le papier est transporté en même temps autour du galet de lecture et du moteur. La taille du dispositif de transport de papier et ainsi le télécopieur dans son ensemble peut être par conséquent réduite, la largeur du moteur et du galet de lecture ensemble n'ayant pas besoin de dépasser la largeur du papier qui est transporté autour du galet de lecture.

La description décrit plus en détail les différentes caractéristiques du dispositif de transport de papier de l'invention. Afin de faciliter la compréhension de l'invention , on fera référence dans la description aux dessins annexés dans lesquels un dispositif de transport de papier est illustré dans un mode de réalisation préféré.

On comprendra bien entendu que le dispositif de transport de papier de la présente invention n'est pas limité au mode de réalisation préféré décrit ci-dessous et illustré aux dessins.

On comprendra également que toutes références au papier dans la description s'appliquent à des films ou à tout autre support approprié pour porter des données graphiques ou pouvant recevoir des données graphiques.

Dans les dessins:
- La figure 1 est une vue de côté d'un télécopieur comprenant un dispositif de transport de papier selon l'invention;
- La figure 2 est une vue en perspective d'un arrangement pour alimenter en papier le dispositif de transport de papier de la figure 1;
- La figure 3 est une en plan de l'ensemble de support du dispositif de transport de papier de la figure 1;
- La figure 4 est une vue en bout de l'ensemble de support de la figure 3;
- La figure 5 est une vue en plan simplifiée du moteur, de deux moyens de transmission et d'un galet de lecture du dispositif de transport de papier de la figure 1;
- La figure 6 est une vue en perspective simplifiée d'un galet de lecture, d'un galet d'impression et de deux moyens de transmission de rotation du dispositif du transport de papier de la figure 1;
- La figure 7 et une vue en coupe et en bout d'une partie du dispositif de transport de papier de la figure 1;
- La figure 8 est une vue en plan de deux roues d'engrenage formant une partie du dispositif de transport de papier de la figure 1;
- Les figures 9, 10 et 11 sont des vues en perspectives simplifiées des dispositifs de transport de papier de la figure 1 réalisant une fonction d'impression;
- La figure 12 est une vue en perspective simplifiée du dispositif de transport de papier de la figure 1 réalisant une fonction de lecture; et,
- La figure 13 est une représentation schématique d'une technique de triage de papier utilisée le dispositif de transport de papier de la figure 1.

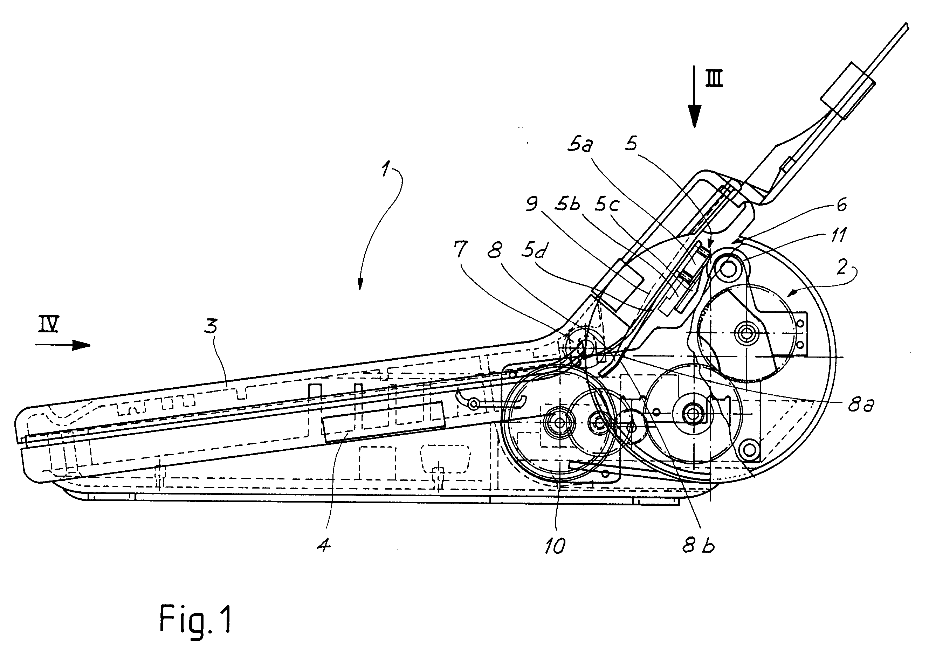

En se référant maintenant à la figure 1, on voit un télécopieur désigné par référence générale 1 ayant un dispositif de transport de papier 2 construit selon l'invention. Le télécopieur 1 comprend un corps principal 3 dans lequel est logé un analyseur d'image ou lecteur 4 formant des moyens de lecture et une unité d'impression 5 formant des moyens d'impression ainsi que le dispositif de transport de papier 2. Un capot 6 est prévu pour loger une partie du dispositif de transport de papier 2 de sorte que quand le dispositif de transport de papier 2 est disposé sur le corps principal 3, comme cela est représenté sur la figure 1, le dispositif de transport de papier 2 est protégé et est recouvert.

Le télécopieur 1 peut comprendre un combiné de téléphone standard, comprenant un émetteur/récepteur de signal vocal et un circuit de traitement de signal vocal. Le corps principal 3 du télécopieur 1 peut être également conformé pour fournir un clavier pour composer des numéros de téléphone, un support pour le combiné de téléphone et d'autres composants associés au fonctionnement d'un téléphone standard.

Le lecteur 4 est logé de façon avantageuse dans le corps principal 3 du télécopieur afin de lire des données graphiques tels que des caractères imprimés, manuscrits ou inscrits de tout autre manière sur du papier que le dispositif de transport de papier 2 fait passé devant le lecteur 4. Le lecteur 4 transforme les données graphiques en signaux électriques. Le télécopieur est apte à envoyer ces signaux électriques via une ligne téléphonique qui sont retransformées par un télécopieur relié à cette ligne téléphonique.

L'unité d'impression 5 comprend une tête d'impression 5a, un circuit de commande de l'impression 5b, un couvercle de protection 5c et un support de montage 5d. La tête d'impression 5a produit des caractères ou des symboles graphiques sur le papier que le dispositif de transport de papier 2 fait défiler devant l'unité d'impression 5. Le fonctionnement de la tête d'impression 5a est commandée par le circuit de commande de l'impression 5b en réponse à la réception par le télécopieur de signaux électriques correspondant à des données graphiques. Le couvercle 5c protège le circuit de commande d'impression 5b contre tout dommage ou impact physique contre le dispositif transport de papier 2 tandis que le support de montage 5d fixe l'unité d'impression 5 au corps principal 3 du télécopieur 1. Le support de montage 5d peut être un organe élastique de manière qu'en service la tête d'impression 5a soit rappelée en direction du dispositif de transport de papier 2 comme cela va être expliqué ci-après.

Le télécopieur 1 comprend en outre un galet d'alimentation en papier 7 et un organe de maintien du papier 8. Le galet d'alimentation 7 est monté à rotation par ses deux extrémités dans le corps principal 3 du télécopieur 1. L'organe de maintien 8 est positionné afin de recevoir plusieurs feuilles de papier introduites dans le télécopieur le long d'une surface de guidage 9 ménagée sur le corps principal 3. Le galet d'alimentation 7 et l'organe de maintien 8 sont disposés de sorte qu'une extrémité d'une ou plusieurs feuilles de papier ainsi introduites dans le télécopieur sont amenées à venir en contact avec le galet 7 et l'organe 8 et sont ainsi maintenues en position. L'organe de maintien 8 comprend une bande de maintien 8a qui peut être réalisée en un matériau ayant un coefficient de friction élevé tel que le silicone, pour augmenter le maintien d'une ou plusieurs feuilles de papier par l'organe de maintien 8. La bande de maintien 8a est maintenue par un bras de support 8b qui peut être réalisé en métal, en plastique ou en tout autre matériau relativement rigide analogue.

Quand le rouleau d'alimentation du papier est entraîné dans le sens horaire à la figure 1, la feuille de papier en contact avec le galet 7 est entraînée sur ce dernier par un contact de friction et est fourni au dispositif de transport de papier. La surface du galet d'alimentation du papier 7 peut être réalisée en silicone ou tout autre matériau ayant un coefficient de frottement élevé afin de renforcer l'action d'entraînement du galet 7. Quand on introduit plus d'une feuille de papier entre le galet 7 et l'organe de maintien 8, les feuilles qui ne sont pas entraînées par le galet 7 sont empêchées d'être introduites dans le dispositif de transport de papier 2 par le contact de friction entre chacune des feuilles restantes et l'organe de maintien 8.

L'organe de maintien 8 peut être mobile entre une première position dans laquelle il permet au papier supporté sur ce dernier de reposer contre le galet d'alimentation 7 et une seconde position dans laquelle l'organe de maintien 8 permet au papier supporté par ce dernier d'être dégagé du galet d'alimentation 7. Par exemple, le bras de support 8b peut être réalisé en métal ou en matériau élastique analogue et agir pour rappeler l'organe de maintien 8 en direction de la première position tout en permettant à l'organe de maintien 8 d'être déplacé dans la seconde position pour éliminer les bourrage de papier ou retirer le papier d'entre le galet d'alimentation 7 et l'organe de maintien 8.

Dans d'autres modes de réalisation, l'organe de maintien 8 peut être rappelé en direction de la seconde position, et le dispositif de transport de papier 2 est muni d'une surface qui vient en contact avec l'organe de maintien 8 et le pousse dans la première position quand le dispositif de transport de papier 2 est relié au corps principal 2.

De manière avantageuse, ce mode de réalisation permet au papier coinçé entre l'organe de maintien 8 et le galet d'alimentation 7 d'être éliminé par simple séparation du dispositif de transport de papier 2 du corps principal 3.

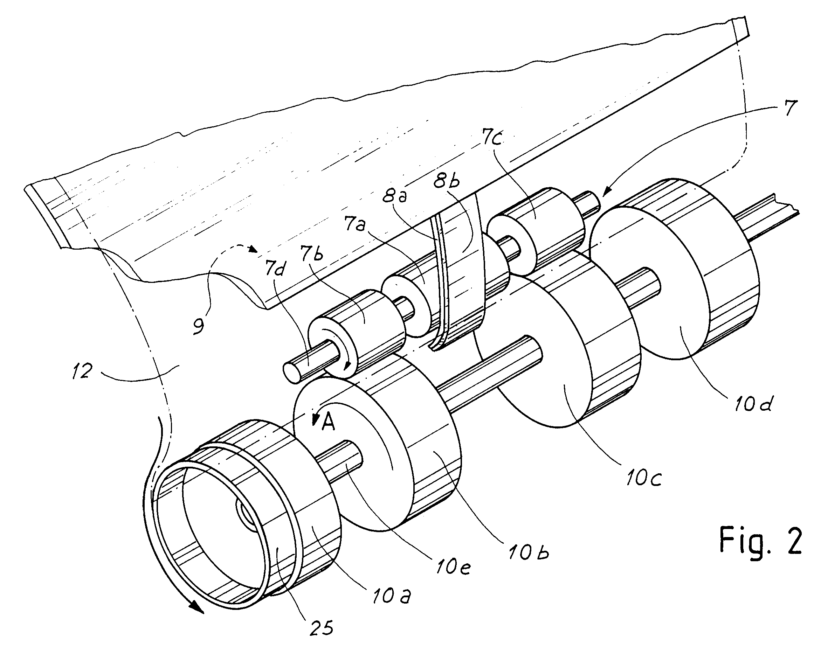

Le dispositif de transport du papier 2 comprend un galet de lecture 10, un galet d'impression 11 et un moteur relié par un train d'engrenages (qui n'est pas montré en détail à la figure 1) qui entraîne le galet de lecture 10 et le galet d'impression 11 afin de permettre le fonctionnement du dispositif de transport de papier 2. La construction du galet d'alimentation 7 et la façon dont il est entraîné sera mieux comprise en liaison avec la figure 2 qui montre une vue en perspective simplifiée de la relation entre le galet d'alimentation 7, l'organe de maintien 8, la surface de guidage 9 et le galet de lecture 10.

Le galet d'alimentation 7 peut être formé d'un ou de plusieurs galets montés coaxialement. Comme cela ressort du mode de réalisation représenté à la figure 2, le galet d'alimentation 7 comprend un galet central 7a et deux galets extérieurs 7d et 7c montés sur un même arbre 7d. En service, l'arbre 7d est monté à rotation dans le corps principal 3 du télécopieur 1. Le galet central 7a est disposé afin de coopérer avec la bande de maintien 8a et l'organe de maintien 8 décrit ci-dessus.

Le galet de lecture 10 peut comprendre un galet unique ou une série de galets séparés tels que les galets 10a, 10b, 10c et 10d représentés à la figure 2. Les galets 10a, 10b, 10c et 10d sont montés sur un même arbre 10e. Les deux galets extérieurs 7b et 7c sont arrangés afin de venir en contact avec les galets 10b et 10c respectivement et forment avec eux un entraînement par friction pour entraîner le galet de lecture 10. Ainsi, quand le galet de lecture 10 est entraîné en rotation dans le sens indiqué en A à la figure 2, le galet d'alimentation 7 est entraîné dans l'autre sens afin d'entraîner une feuille de papier 12 le long de la surface de guidage 9 devant l'élément de maintien 8 et entre les galets 7b, 10b, respectivement 7c et 10c et ensuite dans le dispositif de transport de papier 2. On comprendra toutefois que l'un ou l'autre des galets de lecture 10 et d'alimentation de papier 7 peuvent comprendre respectivement un galet unique et que le galet d'alimentation 7 peut être entraîné par des moyens autres qu'un contact par friction avec la surface du galet de lecture 10. Par exemple, un train d'engrenages ou des courroies classiques peuvent être utilisés.

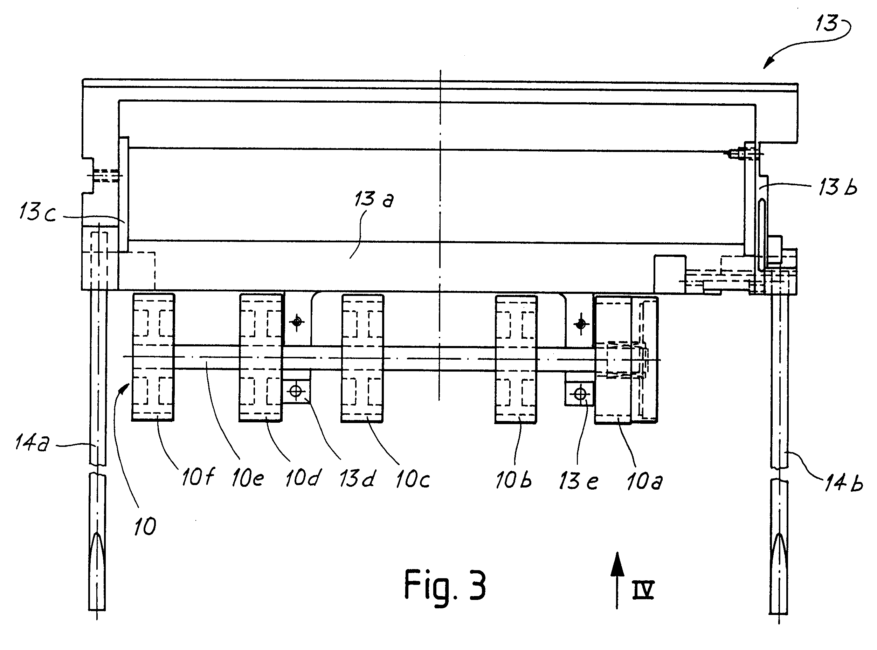

Le dispositif de transport de papier 2 va maintenant être décrit en détail. La figure 3 montre une vue en plan d'un support de montage 13 destiné à être utilisé dans le dispositif de transport de papier 2. En service, le couvercle extérieur 6 est fixé au support de montage 13 mais il n'est pas représenté ici pour des raisons de clarté. Des bras de montage 14a et 14b sont fixés au support de montage 13 pour être introduit dans des trous de montage correspondants (non représenté) ménagés dans le corps principal 3 du télécopieur 1. Les bras de montage 14a et 14b peuvent comprendre de manière connue un crénelage de verrouillage ou des projections destinées à s'engager respectivement avec un crénelage ou des projections complémentaires dans les trous de montages de sorte que le support montage 13 puisse être facilement disposé par rapport au corps principal et puisse être fixé de façon amovible à ce dernier. On comprendra que les bras de montage 14a et 14b et leurs trous de montage correspondants représentent simplement une façon particulière de fixer le dispositif de transport de papier 2, de façon amovible, sur le corps principal. D'autres moyens tels que des encliquetages, des vis ou d'autres organes analogues peuvent être également utilisés.

Le support montage comprend un cadre principal 13a muni de plaques latérales 13b et 13c et de bras de support 13d et 13e. Le cadre principal 13a, les plaques latérales 13b et 13c et les bras de support 13d et 13e seront de préférence réalisés en seule pièce.

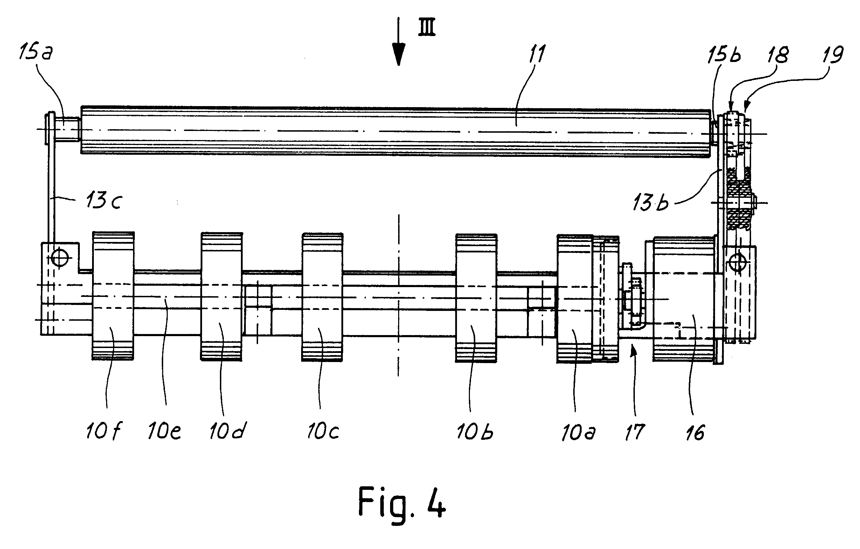

Comme cela ressort de la figure 4, qui montre une vue en bout du dispositif de transport de papier 2 comprenant le support de montage 13 de la figure 3, le galet d'impression 11 est monté à rotation entre les plaques latérales 13b et 13c par l'intermédiaire d'un roulement à billes 13a et d'un axe fixe 13b. Les bras 13d, 13e sont aptes à supporter l'arbre 10e du galet de lecture 10. Les galets 10a, 10b, 10c, 10d et 10e sont ainsi supportés à intervalles espacés le long de la largeur du support de montage 13. Le galet de lecture 10e et les galets d'impression 11 sont ainsi supportés par le support de montage 13 et sont entraînés par un moteur 16 de préférence monté coaxialement au galet de lecture 10. Le moteur 16 est relié au galet de lecture 10 et au galet d'impression 11 par trois moyens de transmission 17, 18 et 19 transmettant un mouvement de rotation. Chacun de ces moyens de transmission 17, 18 et 19 vont maintenant être décrits.

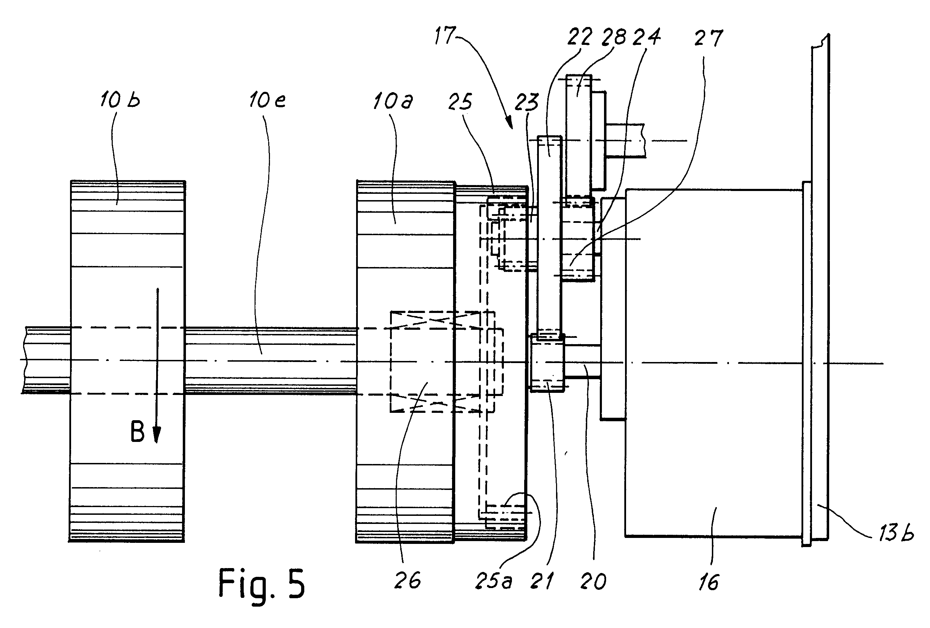

La figure 5 est une vue en plan simplifiée d'une partie du dispositif de transport de papier 2 et montre le moteur 16, les moyens de transmission 17, les galets 10a et 10b et l'arbre 10e. Le moteur 16 est fixé à la plaque latérale 13b du support de montage 13. Un arbre 20 s'étend à partir du moteur 16 et est apte à être entraîné en rotation par ce dernier dans les deux sens.

Les moyens de transmission 17 comprennent un arbre moteur 20, des roues dentées 21, 22 et 23, un arbre monté libre 24, un organe de couplage annulaire 25 et un embrayage unidirectionnel. L'arbre 20 est directement entraîné par le moteur 16. La roue 21 est fixée sur de l'arbre 20 et tourne avec l'arbre 20. L'arbre 24 est monté librement à rotation dans le boîtier du moteur 16. Par conséquent, il n'est pas directement entraîné par le moteur 16. La roue 22 est fixée sur l'arbre 24 afin de venir en contact avec la roue 21. De cette façon le moteur 16 entraîne l'arbre 20 et la roue 21 dans un sens, entraînant ainsi la roue 22 et la roue 24 en sens inverse. La roue 23 est également fixée sur la roue 24 afin de venir en contact avec une surface intérieure 25a de l'organe de couplage annulaire 25 et d'entraîner l'organe de couplage annulaire 25 dans le même sens que l'arbre 20. L'organe annulaire 25 est représenté en coupe de sorte que la surface intérieure 25a puisse être visible.

L'arbre 10e du galet de lecture 10 auquel sont fixés par exemple les galets 10a et 10b est relié à l'organe de couplage annulaire 25 par un embrayage unidirectionnel 26. La rotation est transmise à partir de l'organe de couplage annulaire à l'arbre 10e seulement dans un sens de rotation de l'organe annulaire 25 mais pas dans l'autre.

Dans le mode de réalisation représenté à la figure 5, la rotation de l'arbre 20 dans le sens provoquant la rotation du galet 10 dans le sens indiqué en B est transmise à l'arbre 10e mais quand l'arbre 20 tourne dans l'autre sens, l'organe annulaire 25 et l'embrayage unidirectionnel 26 tournent sans venir en contact avec l'arbre 10e.

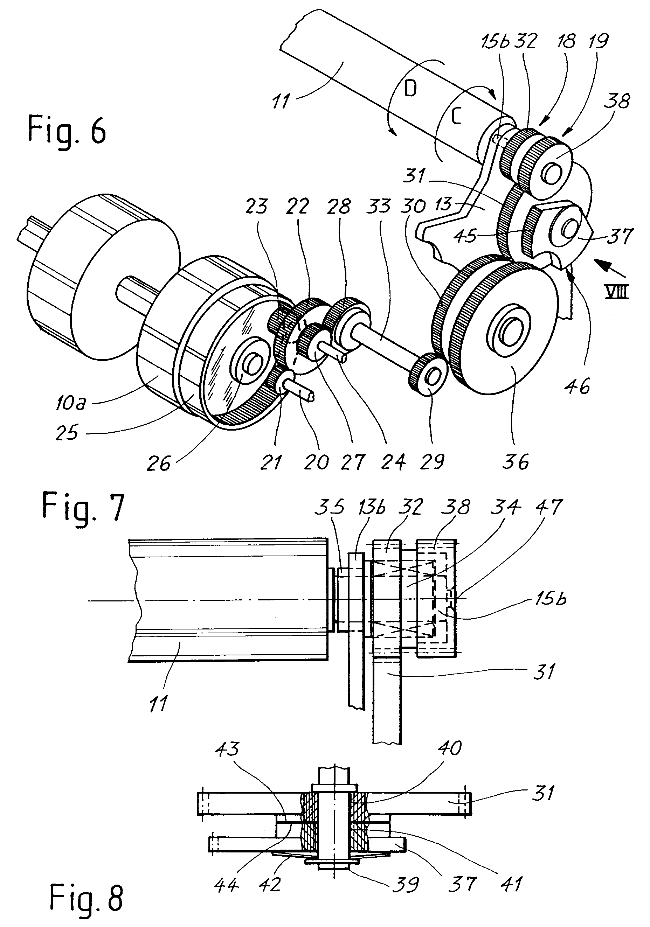

Les moyens de transmission 18 et 19 vont maintenant être décrits en se référant aux figures 6 à 8. La figure 6 montre une vue en perspective du galet de lecture 10, du galet d'impression 11 et des moyens de transmission 18 et 19. Les détails du montage de ces éléments et du moteur 16 sur le support de montage 13 ont été omis sur ces figures afin de représenter clairement les moyens de transmission 18 et 19.

Comme cela a été décrit précédemment, la roue 21 fixée à l'arbre moteur 20 vient en contact avec la roue 23 et entraîne en rotation l'arbre 24. Le reste des moyens de transmission 18 permettent au moteur 16 d'entraîner indirectement le galet d'impression 11 dans un sens et comprennent les roues d'engrenages 27, 32, un arbre 33 un embrayage unidirectionnel 34 et l'arbre 15b du galet d'impression 11. La roue 27 est fixée sur l'arbre 24 afin de tourner avec ce dernier, et vient en contact avec la roue 28. L'arbre 33 relie de façon permanente la roue 28 à la roue 29 qui permet la rotation de la roue 32 par l'intermédiaire des roues 30 et 31 dans les deux sens.

Comme cela est visible à la figure 7, l'arbre 15b du galet d'impression 11 est relié à la roue 32 par l'embrayage unidirectionnel 34 de sorte que l'arbre 15b est entraîné en rotation par la roue 32 quand il tourne dans le sens indiqué par C à la figure. Toutefois, il n'est pas affecté par la rotation de la roue 32 dans le sens indiqué D à la figure. L'arbre 15b est supporté dans un manchon 35 qui est maintenu dans la plaque latérale 13b du support de montage 13. Ainsi, la rotation de l'arbre moteur 20 dans le sens D est transmise au galet d'impression 11 l'entraînant ainsi dans le sens C.

Les moyens de transmission 19 comprennent outre les arbres 15b, 20 et 33, et les roues 21, 23 and 27 à 32 décrites ci-dessus les roues 36, 37 et 38. Comme cela ressort clairement de la figure 8, la roue 37 est reliée à la roue 31 par une broche de connexion 39 qui s'étend à travers des ouvertures 40 et 41 ménagées respectivement dans les roues 31 et 37 respectivement. Des moyens de fixation 42 sont disposées à une des extrémités de la broche 39 afin d'empêcher les roues 31 et 37 de se dégager de la broche 39. Les roues 31 et 17 ont des faces opposées respectives 43 et 44. La longueur de la broche 39 est choisie pour que, quand les roues 31 et 37 sont montées sur celle-ci les faces 43 et 44 soient amenées à s'appuyer l'une contre l'autre. De cette manière, la roue 37 est entraînée en rotation quand la roue 31 est mis en rotation par friction des faces 43 et 44.

La roue 36 peut être reliée de façon similaire afin d'être entraînée par l'action par la roue 31. Toutefois dans un mode de réalisation préféré de l'invention, la roue 36 forme une structure unitaire avec la roue 30 et les deux roues ont un axe de rotation commun et tournent ensemble. La roue 37 ne comporte des dents que le long de deux portions 45 et 46 de sa circonférence pour venir s'engager avec les roues 36 et 38 comme cela va être décrit.

Comme cela ressort de la figure 7, la roue 38 est directement reliée à l'arbre 15b du galet d'impression 11 et la rotation de la roue 38 dans un sens quelconque entraîne une rotation correspondante du galet d'impression 11.

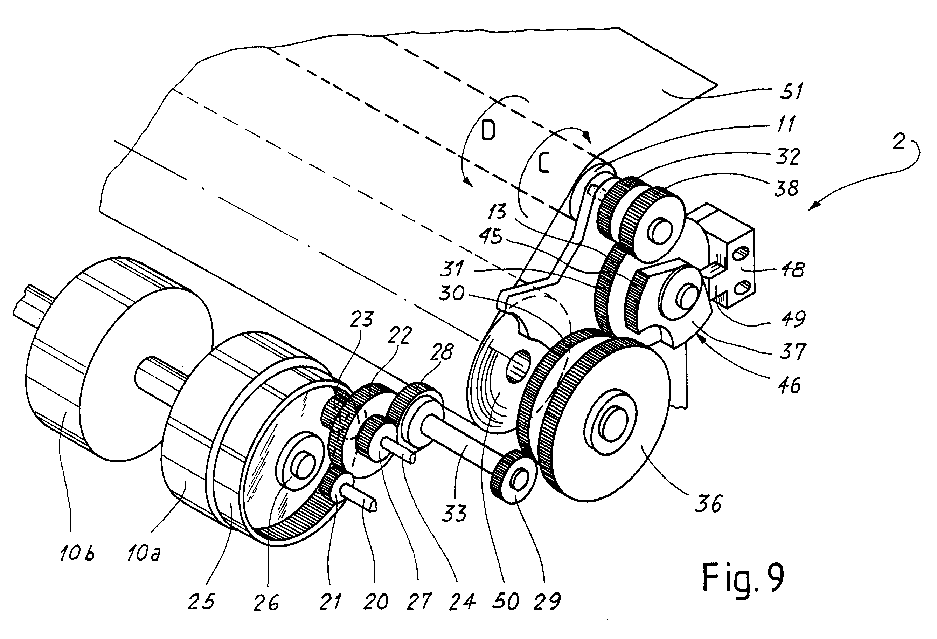

En se référant maintenant à la figure 9, on voit une version simplifiée du dispositif de transport de papier représenté à la figure 6 comportant en outre une vue en coupe du support de montage 13 et un d'organe d'arrêt 48 relié à ce dernier. L'organe d'arrêt 48 présente un doigt 49 qui est disposé pour venir en contact avec la roue 37 et ainsi empêcher sa rotation.

Le dispositif de transport de papier est également apte à recevoir un rouleau de papier 50 sur lequel la tête d'impression 5a imprime les données graphiques reçues par le télécopieur 1. Le rouleau de papier 50 peut être inséré entre le galet de lecture 10 et le rouleau d'impression 11 sur une surface de support (non représentée) disposée à l'intérieur du dispositif de transport du papier 2, bien que d'autres moyens pour disposer le rouleau de papier 50 puissent être facilement envisagé. Afin d'insérer le rouleau de papier 50, le dispositif de transport de papier 2 est séparé du corps principal 3 en faisant coulisser le dispositif de transport de papier 2 vers l'arrière du télécopieur le long des bras de montage 14a et 14b (comme cela est représenté à la figure 3a). Le rouleau de papier 50 peut alors être inséré et son extrémité 51 peut être déroulée et placée sur le galet d'impression 11. Le dispositif de transport de papier 2 peut alors être simplement repoussé le long des bras de montage 14a et 14b et être amené en contact avec le reste du télécopieur 1.

Cette simple séparation du corps principal 3 du dispositif de transport de papier 2 permet de façon avantageuse d'éliminer le bourrage de papier dans le dispositif de transport de papier 2 en permettant à l'organe de maintien 8 et au galet d'alimentation 7 de se séparer comme cela est décrit précédemment.

Comme cela est visible à la figure 1, la disposition initiale de l'extrémité du rouleau 51 sur le galet d'impression 11 garantit que lorsque le dispositif de transport de papier 2 est mis en contact avec le reste du télécopieur 1, le galet d'impression 11 provoque la mise en contact de l'extrémité 51 avec la tête d'impression 5a de sorte que l'unité d'impression 5 peut commencer à imprimer sur le papier 51. La bride de montage 5d contribue à maintenir la relation entre la tête d'impression 5a et le papier 51 en provoquant le rappel de l'unité d'impression 5 en direction du galet d'impression 11. Ainsi, il n'est pas nécessaire de prévoir un mouvement indépendant de la tête d'impression 5 s'écartant du galet d'impression 11 afin de charger le rouleau de papier 50.

En outre, l'introduction du dispositif de transport de papier 2 le long de des bras de montage 14a et 14b afin de venir en contact avec le corps principal du télécopieur 1 provoque la mise en contact du galet d'alimentation 7 avec le galet de lecture 10. Le galet de lecture 10 peut ainsi entraîner le galet d'alimentation 7 de sorte que le papier portant les données graphiques peut être fourni au dispositif de transport de papier 2. Le dispositif de transport de papier 2 peut ainsi être retiré et réintroduit dans le télécopieur d'une manière simple sans nécessiter de connexion ultérieure d'engrenages ou d'autres moyens compliqués de couplage du galet de lecture 10 avec le galet d'alimentation 7.

On va maintenant décrire le fonctionnement du dispositif de transport de papier 2 quand une fonction d'impression de lecture et de retour de papier sont réalisés en se référant plus particulièrement aux figures 9 à 11.

Quand le télécopieur 1 reçoit des signaux électriques représentatifs de données graphiques via la ligne téléphonique à laquelle il est connecté, le circuit de commande d'impression 5b commande la tête d'impression 5a afin d'imprimer les caractères et symboles appropriés sur le papier 51. Afin de séparer les caractères et rendre disponibles à l'utilisateur le papier portant les données graphiques imprimées, le moteur 16 entraîne l'arbre 20 dans le sens D ce qui entraîne la rotation des roues 23 et 27 et la rotation de l'arbre 24 dans le sens C et ainsi la rotation des roues 28 et 29 et la rotation de la roue 33 dans le sens D, de la roue entre dans le sens C, de la roue 31 dans le sens D et de la roue 32 dans le sens C.

L'embrayage unidirectionnel 34 transfère la rotation de la roue 32 à l'arbre 15b du galet d'impression 11 qui est entraîné dans le sens C et ainsi transporte le papier 51 devant la tête d'impression 5a. La roue 30 et ainsi la roue 36 sont entraînés dans le sens C. La roue 37 est entraînée par contact de friction avec la roue 31 mais est empêchée de tourner dans le sens D par le doigt 49 de l'organe d'arrêt 48. Les régions dentées 45 et 46 sont disposées autour de la roue 37 si bien que dans cette position, la roue 37 ne vienne ni en contact avec les roues adjacentes 36 ni avec la roue adjacente 38. Le rouleau de papier 50 continue d'être entraîné devant la tête d'impression 5a par le galet d'impression pendant la durée de l'opération d'impression. Quand on désire faire défiler le papier 51 en sens inverse devant la tête d'impression 5a par exemple après que l'utilisateur a déchiré le papier portant les données graphiques et/ou avant l'impression des prochaines données graphiques, le moteur 16 entraîne en rotation l'arbre 20 dans le sens C. La rotation de l'arbre 20 est transmise à la roue 32 par les éléments qui viennent d'être décrits et qui sont maintenant entraînés en sens inverse de sorte que la roue 32 est entraînée dans le sens D. Toutefois, l'embrayage unidirectionnel 34 empêche la transmission de la rotation de la roue 32 dans ce sens à l'arbre 15b du galet d'impression 11. Dans le procédé de transmission de la rotation dans le sens C à la roue 32, la roue 31 est entraînée en rotation dans le sens C. La roue 37 est par conséquent entraînée par la roue 32 dans le même sens de sorte qu'elle n'est plus en contact avec l'organe d'arrêt 48. la roue 37 est ainsi entraînée en rotation dans le sens C.

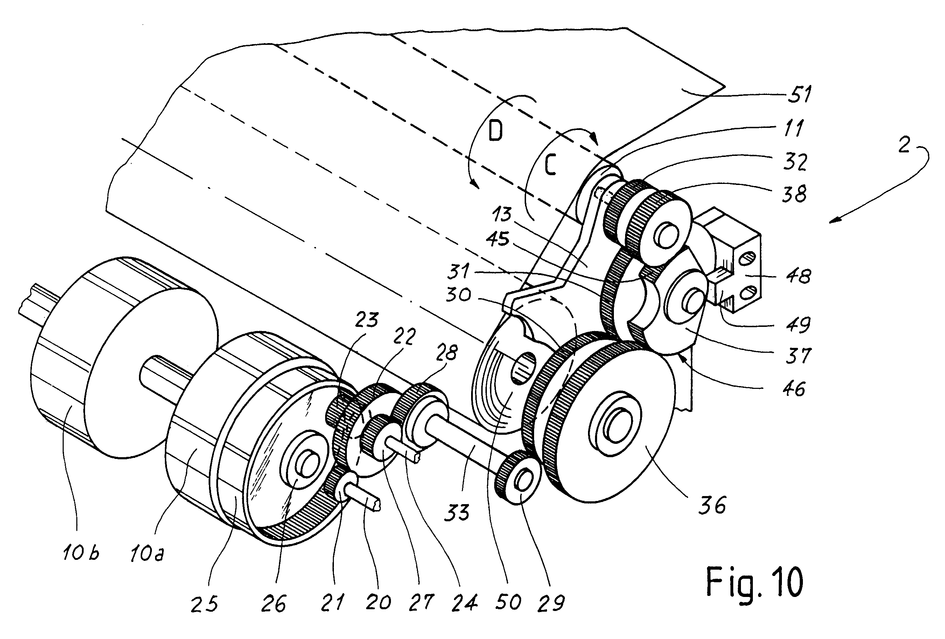

Comme cela ressort de la figure 10 la partie dentée 45 vient en contact avec la roue 38 pendant la rotation de la roue 37 et l'entraîne en rotation dans le sens D. La région dentée 46 est disposée sur la roue 37 de sorte qu'elle vient en contact avec la roue 36 quand la région dentée 45 vient en contact avec la roue 38. On comprendra toutefois que la rotation de la roue 38 peut être commandée sans ce contact secondaire. La roue 38 est reliée à l'arbre 15b du galet d'impression 11 de sorte que sa rotation entraîne la rotation du galet d'impression dans le sens D et le transport du papier 51 en sens inverse devant la tête d'impression 5a.

La roue 38 continuer d'être entraînée par la roue 37 jusqu'à ce que, par rotation de la roue 37, la région dentée 45 cesse d'être en contact avec la roue 38; le galet d'impression n'est plus entraîné et cesse de tourner. Le galet d'impression 11 n'est par conséquent entraîné en rotation dans le sens D que d'une distance angulaire correspondant à celle de la région dentée 45. Cette distance angulaire détermine la distance linéaire sur laquelle le papier 51 défile en arrière devant la tête d'impression 55a.

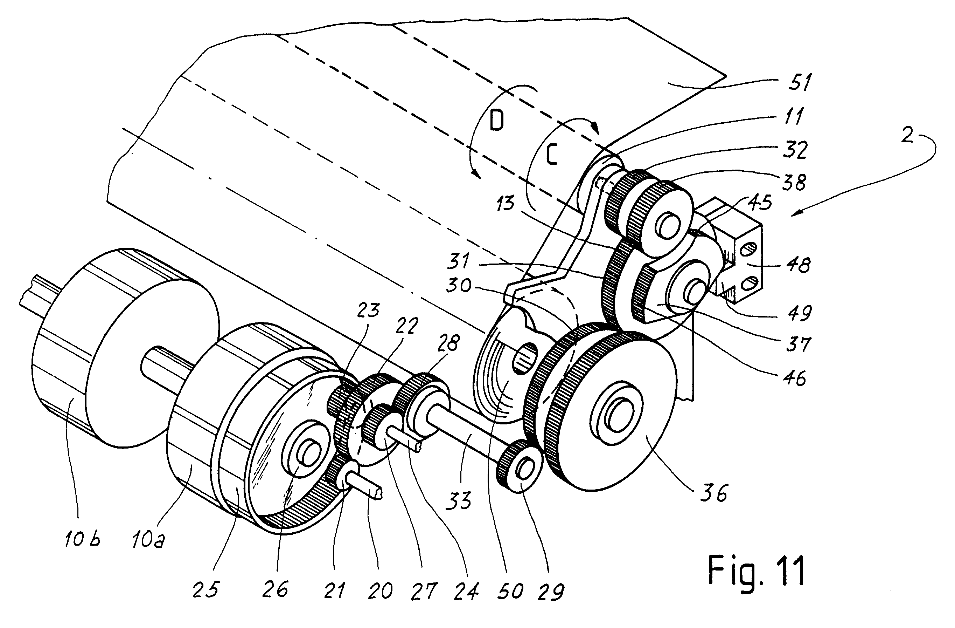

En se référant maintenant à la figure 11, on peut voir que la roue 37 continue de tourner sans venir en contact avec la roue 38 jusqu'à ce qu'elle vienne en contact avec le doigt 49 de l'organe d'arrêt 48. La roue 38 est maintenue dans cette position alors que l'arbre 20 du moteur 16 continue de tourner dans le sens C. Le papier 51 ne défile par conséquent en sens inverse devant la tête d'impression 5a qu'une seule fois et sur une distance déterminée par la distance angulaire de la région dentée 45.

Quand de nouvelles données graphiques sont reçues par le télécopieur, le galet d'impression 11 est entraîné en rotation dans le sens C, un contact de friction avec la roue 31 entraîne la roue 37 en rotation en sens inverse dans le sens D jusqu'à ce qu'elle vienne en contact avec l'organe d'arrêt 37 comme cela est représenté à la figure 9.

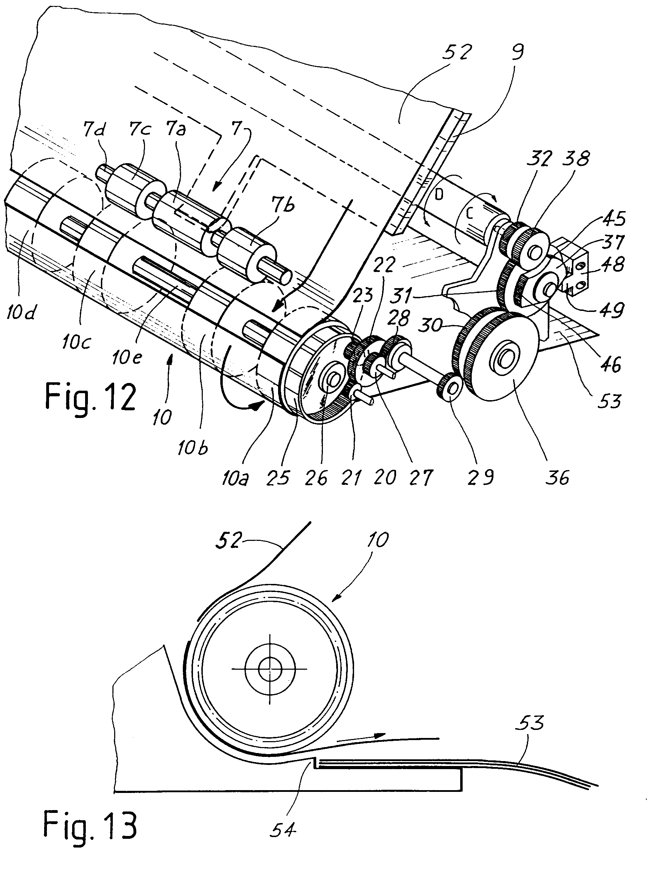

On décrira maintenant en liaison avec la figure 12 le fonctionnement du dispositif de transport de papier 2 du télécopieur 1 lorsqu'il lit des données graphiques à transmettre.

Comme cela a été précédemment expliqué en liaison avec la figure 2, des feuilles de papier 52, 53 formant le support des données graphiques sont disposés sur la surface de guidage 9 et introduites dans le dispositif de transport de papier 2 par l'intermédiaire du galet d'alimentation 7. l'arbre 20 du moteur 16 est entraîné dans le sens C de sorte que les roues 22 et 23 sont entraînées en rotation dans le sens D. L'organe annulaire 25 et par conséquent les galets 10a, 10b et 10c sont entraînés en rotation dans le sens D pour entraîner les feuilles 52 et 53 autour du galet de lecture 10.

De façon avantageuse le moteur 16 peut être disposé coaxialement au galet de lecture 10 de sorte que les feuilles 52 et 53 passent à la fois autour du galet de lecture 10 et du moteur 16 réduisant ainsi au minimum l'encombrement du dispositif de transport de papier.

Le sens de rotation de l'arbre 20 est tel qu'il entraîne en rotation la roue 31 dans le sens C. Si une fonction d'impression vient juste d'être effectuée, la roue 37 sera dans la position représentée à la figure 9. La rotation de l'arbre dans le sens C va ainsi provoqué le transport automatique du papier 51 en sens inverse devant la tête d'impression 5a sur une distance correspondant à la distance angulaire de la région dentée 45 de la roue 37. Si, toutefois, la fonction de retour de papier a déjà été effectuée, la roue 37 sera dans la position représentée à la figure 12 et la lecture des feuilles 52 et 53 rappellera la roue 37 en direction de l'organe d'arrêt 48 et restera en contact avec cette dernière.

Comme cela est représenté à la figure 13, on a prévu une marche 54 sur le trajet des feuilles 52 et 53. Cette marche permet aux feuilles, une fois qu'elles sont passées autour du galet de lecture 10, de s'élever sur celle-ci et ensuite de tomber. De cette façon, la feuille 52 est obligée de tomber au-dessus de la feuille 53. Toutes les feuilles lues par le télécopieur sont ainsi triées dans l'ordre dans lequel elles ont été placées dans la surface de guidage 9 une fois qu'elles ont été lues.

Enfin, on comprendra que différentes modifications et/ou additions peuvent être apportées au dispositif de papier sans s'éloigner du cadre de la présente invention défini par les revendications annexées.

En particulier, on comprendra que l'on peut y substituer des composants mécaniques équivalents sans sortir du cadre de l'invention. Par exemple, on peut remplacer les roues dentées par des roues à friction et des courroies d'entraînement, la denture radiale peut être remplacée par une denture de chant etc.

## Revendications

1. Dispositif de transport de papier (2) destiné à être utilisé dans un télécopieur (1) comprenant des moyens de lecture (4) pour lire des données graphiques à transmettre à partir d'un premier support (52) et des moyens d'impression (5) pour imprimer des données graphiques reçues sur un second support (51), ledit système de transport de papier (2) comprenant un galet de lecture (10) pour transporter ledit premier support (52) devant lesdits moyens de lecture (4), un galet d'impression (11) pour transporter ledit second support (51) devant lesdits moyens d'impression (5) dans une direction avant, un moteur (16) ayant un arbre (20) pouvant être entraîné en rotation dans les deux sens, des premiers moyens de transmission (17) pour transmettre audit galet de lecture (10) la rotation dudit arbre (20) dans un premier sens (C) et transporter ledit premier support (52) devant lesdits moyens de lecture (4) et des seconds moyens de transmission (18) pour transmettre audit galet d'impression (11) la rotation dudit arbre (20) dans un second sens (D) et transporter le second support (51) devant lesdits moyens d'impression (11), caractérisé en ce que ledit dispositif de transport de papier (2) comprend en outre des troisièmes moyens de transmission (19) pour transmettre audit galet d'impression (11) la rotation dudit arbre (20) dans ledit second sens (D) pour que le galet d'impression (11) se déplace d'un angle donné transportant ainsi, d'une longueur correspondante, ledit second support (51) et lesdits moyens d'impression (5) dans une direction arrière opposée à ladite direction avant.

2. Dispositif de transport de papier selon la revendication 1, caractérisé en ce que lesdits troisièmes moyens de transmission (19) comprennent une pluralité d'éléments rotatifs (36,37,38) un premier élément rotatif (37) ayant une première région de contact (45) s'étendant le long d'une première partie de sa périphérie pour entraîner un deuxième élément rotatif adjacent (38).

3. Dispositif de transport de papier selon la revendication 2, caractérisé en ce que ledit premier élément rotatif (37) présente une deuxième région de contact (46) le long d'une deuxième partie de sa périphérie destinée à être entraînée par un troisième élément rotatif adjacent (36).

4. Dispositif de transport de papier selon l'une des revendications 2 ou 3, caractérisé en ce que ledit premier élément rotatif (37) comprend une roue d'engrenage.

5. Dispositif de transport de papier selon la revendication 4, caractérisé en ce que ladite première région de contact (45) comprend une denture répartie le long de ladite première partie.

6. Dispositif de transport de papier selon l'une quelconque desdites revendications 2 à 5, caractérisé en ce que lesdits deuxièmes moyens de transmission (18) comprennent un organe rotatif (31) apte à venir en contact avec ledit premier élément rotatif (37) de sorte que l'organe rotatif (31) forme un embrayage à friction et applique une force rotationnelle audit premier élément rotatif (37).

7. Dispositif de transport de papier selon l'une quelconque des revendications 2 à 6, caractérisé en ce que lesdits troisièmes moyens (19) comprennent en outre un organe d'arrêt (48) apte à venir en contact avec ledit premier élément rotatif dans une première position dans laquelle ledit premier élément rotatif ne vient pas en contact avec ledit deuxième élément rotatif adjacent (38), ledit organe d'arrêt (48) empêchant ainsi la rotation dudit premier élément rotatif (37) dans ledit premier sens (C) qui entraînerait alors ledit deuxième élément adjacent (38) et permettrait audit galet d'impression (11) de tourner dans ledit autre sens (D).

8. Dispositif de transport de papier selon la revendication 7, caractérisé en ce que ledit organe d'arrêt (48) est en outre apte à venir en contact avec ledit premier élément rotatif (37) dans une deuxième position dans laquelle ledit premier élément rotatif ne vient pas en contact avec ledit deuxième élément rotatif adjacent (38) ledit organe d'arrêt (48) empêchant ainsi la rotation dudit premier élément rotatif (37) dans l'autre sens (D).

9. Dispositif de transport de papier selon la revendication 8, caractérisé en ce que ladite première position et ladite seconde position sont séparées angulairement dudit angle donné.

10. Dispositif de transport de papier selon l'une des revendications 8 ou 9, caractérisé en ce que ledit premier élément rotatif (37) est entraîné en rotation à partir de ladite seconde position vers ladite première position par la rotation dudit galet de lecture (10) pour transporter ledit premier support (52) devant lesdits moyens de lecture (4).

11. Dispositif de transport de papier selon l'une quelconques des revendications 7 à 9, caractérisé en ce que ledit premier élément rotatif (37) est entraîné en rotation à partir de ladite première position vers ladite seconde position par la rotation dudit galet d'impression (11) pour transporter ledit second support (51) devant lesdits moyens d'impression (5).

12. Dispositif de transport de papier selon l'une quelconques des revendications précédentes, caractérisé en ce que ledit moteur (16) est disposé coaxialement audit galet de lecture (10), ledit premier support (52) passant autour dudit premier moteur (16) lorsqu'il est transporté devant lesdits moyens de lecture (4) par le galet de lecture (10).
